# EUROPEAN PATENT APPLICATION

(11) **EP 4 145 660 A1**
(43) Date of publication of application: **08.03.2023**
(21) Application number: 21194220.6
(22) Date of filing: 01.09.2021
(51) Int. Cl.: H02J 3/00, H02J 3/14, H02J 13/00

(54) **DYNAMIC COMPUTATION AND CONTROL OF DISTRIBUTED ASSETS AT THE EDGE OF A POWER GRID**

(71) Applicant: Smart Wires Inc., Union City, CA 94587 (US)
(72) Inventor: INAM, Haroon, San Jose (US); KREIKEBAUM, Frank, Union City (US)
(74) Representative: Gallego Jiménez, José Fernando

(57) **Abstract**

A system enabling localized intelligent control with communication and coordination at local subsections of a power grid with information transfer to utility for supervisory control is disclosed. The disclosure extends the control and communication capability within, at the edge, and outside the edge of the power grid using intelligent and self-aware FACTS devices. Aspects of the disclosure enable control of a distribution network, energy storage systems and generation sources as an integrated system allowing optimization of power grid operation from generation to distribution. This control capability further enables a supervisory utility to implement and manage policy issues, such as standard compliance, carbon emission reduction, right-of-way management, and conformance to environmental regulations, such as EMI compliance, noise reduction, etc. This also allows the supervisory utility to optimize energy cost, network reliability, and asset utilization and life.

## Description

### TECHNICAL FIELD

The present disclosure relates to systems for integrated and hierarchical monitoring and distributed control, from distributed generation to distributed loads, of a power grid system using a plurality of self-aware intelligent flexible alternating current transmission systems (FACTS), a plurality of impedance injection modules (IIMs), storage device controllers and other FACTS devices to enable dynamic computation and control of distributed assets at the edge of the power grid.

### BACKGROUND

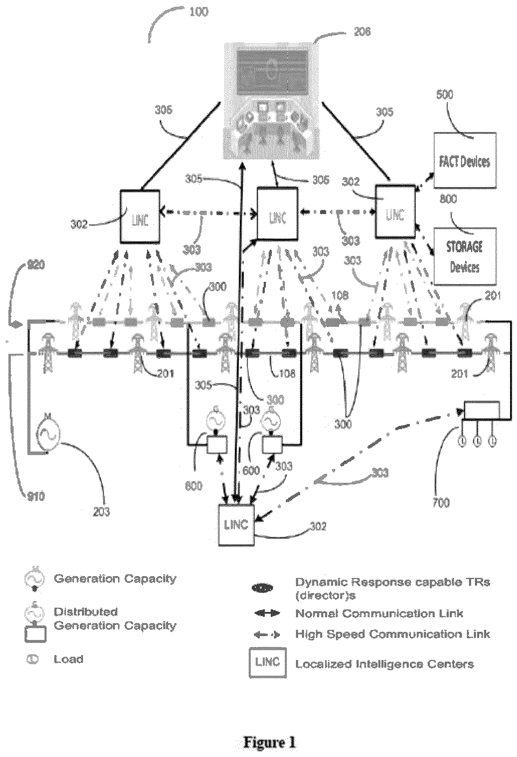

Most prior art power utilities use energy management system (EMS)/supervisory control and data acquisition (SCADA) control systems for control of the power grid systems. These control systems provide connection and communication between the controllers and devices at the substations that are used to limit power flows and load imbalances over the grid lines and provide interactive control of the power transmission on the grid. Distributed and localized control of power flow over the HV and MV transmission lines using FACTS based IIMs has been proposed. The self-aware IIMs are able to identify and react very fast to the changes in the power line characteristics at a local level. These intelligent IIMs provide a capability to have localized control of line current and line balancing. This is to be described in Figure 1 in more detail herein below.

The recent advances in non-conventional generation, such as wind, solar, geothermal, tidal and wave energy systems, that respond to unpredictable weather and environment-related characteristics and are dispersed across geographical locations, coupled with the cyclic nature of consumer demand for power, has made the optimization of power flow over the grid from generation to distribution based on models established and controlled by the utilities difficult.

The addition of power storage and other FACTS devices within and outside the edge of the grid are being attempted to improve the overall grid system performance. These FACTS and power storage units/devices coupled to the power grid need to be integrated with the power grid with control and communication capability to work efficiently.

In addition, environmental issues, health concerns, climate controls, view aesthetics, and regulations at various levels of governments are now forcing the utilities to deal with a set of new issues and initiatives when operating the power grids. It will be very useful to have the capability to integrate the new distributed FACTS-based control of generation capacity, the power storage units/devices and so on with compliances, regulations and rules into a single system with standardized control and communication capability. Such a capability will provide the power grid system with the capability to react to changes proactively using all the resources available to it before power related issues develop and become critical.

A system has been proposed in the US patent application 15/428,906, with capability for fast response at local level, fast communication between system elements in the neighborhood for adaptive flow control and information transfer from the local centers established to the main control centers for supervisory action and assigned to the assignee of the current application. However, such a system is not configured to optimize the distributed power generation, use the power storage capabilities efficiently, maximize the effectiveness of new and advanced FACTS devices and/or provide efficient and optimized management of distribution of power while optimizing the grid operation, speeding up recovery from problems and improving grid utilization. The technical solution proposed in the present invention is compatible with a system as described in the US patent application 15/428,906 or similar systems with communication and control capability. Thus, the technical solution proposed by the present invention provides a power grid system with the capability of incorporating a set of policy/regulation/rule constraints for implementing a number of useful objective functions, using the intelligent integrated FACTS based control capability, to optimize energy cost, network reliability, and asset utilization and life.

### SUMMARY

A first aspect of the invention relates to a system for integrated and hierarchical monitoring and control of a high-voltage or medium-voltage power grid. The system may comprise: a plurality of localized intelligence centers; a high-voltage or medium voltage power grid comprising a plurality of transmission lines configured to transport power at high-voltage or medium-voltage, preferably from power generators to substations and/or other to a plurality of distributed loads, wherein the plurality of loads comprise loads distributed over the transmission lines and/or loads external to the power grid; a plurality of sensors coupled to and collectively distributed over or deployed along the transmission lines, each sensor being configured to measure environmental conditions of one of the plurality of transmission lines; a plurality of impedance injection modules (IIMs) coupled to and deployed along the transmission lines, each IIM being coupled to a respective segment of one of the plurality of transmission lines and being configured to sense power flow characteristics comprising current and/or voltage and/or power flow changes on the respective transmission line, and to inject voltage or impedance into its the respective transmission line, and to communicate with at least one localized intelligence center; and a supervisory utility for providing a hierarchical monitoring and control of the power grid.

In a preferred embodiment at least a subplurality of the loads has demand-response capability. Thus, the loads of this subplurality of loads are configured to be selectively connected to the power grid with a connection that configured to have a demand-response capability, i.e. the loads having demand-response capability are configured to be selectively connected (or disconnected) to adjust a power demand of the power grid to a power availability in the power grid, thereby contributing to match the demand of power with the supply of power.

The power generators may be configured as large power plant capabilities such as thermal power plants, atomic power plants and hydroelectric power plants. The power generators may further comprise distributed generation sources such as wind energy farms and solar energy farms as well as other new green power generation facilities.

The environmental conditions measured by the plurality of sensors may comprise at least one of: temperature, humidity, noise, wind speed, and/or geomagnetically induced current GIC vibration. In some embodiments, the plurality of sensors may be configured to communicate, preferably in real-time, the respective measured environmental condition to at least one localized intelligence center and/or to at least one IIMs. In preferred a preferred embodiment, each sensor may further comprises a high-speed transceiver configured to communicate the environmental conditions to the respective localized intelligence centers through high-speed communication links to provide the sub-cyclic local response. The plurality of sensors may be configured as FACTS-based sensor modules.

The supervisory utility may be configured for providing hierarchical monitoring and control of a high-voltage or medium-voltage power grid. For achieving the hierarchical monitoring and control of the power gird, the supervisory utility may be configured for: receiving, preferably in real-time, the environmental conditions measured by the plurality of sensors; receiving preferably in real-time, the power flow characteristics of the transmission lines sensed by the respective IIMs; determining, based at least on the received environmental conditions and the received power flow characteristics of the transmission lines, setting instructions for the plurality of localized intelligence centers for controlling the power flow on the transmission lines; and communicating the setting instructions to the plurality of localized intelligence centers.

Each IIM may comprise a high-speed transceiver to report the power flow characteristics to the at least one localized intelligence center to which is connected, through a high-speed communication link. The plurality of IIMs may be distributed over the transmission lines (i.e. each IIM may be connected to a respective segment of a transmission line) and/or disposed in at least one substation of the power grid.

The supervisory utility may be configured as a supervisory entity enabled for monitoring, modelling and control the power of a power grid. In particular, the supervisory utility may be configured to operate as an optimization engine, i.e. the supervisory utility may be configured as a data processing system (i.e. the supervisory utility may have a processing capability) configured to operate as an optimization engine generating decisions and settings (i.e. the setting instructions) to be communicated to the plurality of localized intelligence centers, wherein the decisions and settings are based on the inputs received by the supervisory utility (i.e. the environmental conditions measured and/or the power flow characteristics of the transmission lines sensed by the IIMs) and/or any operational constraint and/or any operational objective function).

Controlling the power flow on the transmission line may comprise controlling the power flowing through the power grid, in particular the power entering into the power grid from the power generators and/or the power flow being consumed by the plurality of loads. Controlling the power flow may further comprise controlling the power factor of the power grid.

The localized intelligence centers that are in communication with at least one of the plurality of IIMs may be further configured to provide specific injection settings to the plurality of IIMs, based on the setting instructions provided by the supervisory utility, for controlling the power flow on the transmission lines. The plurality of IIMs may be configured to receive the specific injection settings from the respective intelligence centers, and may be further configured to locally inject voltage or impedance into the respective segment of the respective transmission line based on the specific injection settings provided by the localized intelligence centers, thereby controlling the power flow of the transmission lines. The injection settings may be configured for instructing the IIM to locally inject specific values of voltage or impedance into the respective segments, for instance, for controlling the power factor of power grid.

Therefore, the localized intelligence centers, the sensors, the IIMs, and the supervisory utility collectively provide hierarchical monitoring and control of the power grid, with the plurality of IIMs being configured to receive the specific injection settings from the respective intelligence centers, and being further configured to locally respond by injecting voltage or impedance into the respective segment of the respective transmission line based on the specific injection settings provided by the localized intelligence centers, thereby controlling to control the power flow of the transmission lines.

The supervisory utility may be further configured to identify at least one operational objective function for the system and/or at least one operational constraint for the system. The identification of an operational function and/or of a constraint may comprise identifying at least one previously pre-set operational function and/or at least one previously pre-set operational constraint. In some cases, the operational objective functions and/or the operational constraints may be received by the supervisory utility, before the identification step. In some embodiments, the operational objective functions and/or constraints may be adapted or optimized during the operation of the system.

The supervisory utility may be configured such that determining the setting instructions for the plurality of localized intelligence centers for controlling the power flow on the transmission lines may further comprise achieving the at least one operational objective function for the system and/or the at least one operational constraint for the system. Thus, the setting instructions are determined taking into consideration further operational requirements (i.e. operational objective functions and/or operational constraints) that have to be met or fulfilled (i.e. as a target) by the system. Therefore, controlling the power flow in the power grid (e.g. controlling the power factor of the power grid or controlling the power flowing through the power system) may further comprise configuring the system by means of the setting instructions for achieving at least one operational objective function and/or at least one operational constraint for the system.

The at least one operational objective functions may comprise one or more of: correcting the power factor of the power grid (in the cases in which this function is not included as an implicit part of the control of the power flow), obtaining an energy cost target or optimization, obtaining a network reliability target or optimization, and obtaining an asset utilization and life target or optimization. The at least one of the operational constraints may include one or more of: standard compliance of current and voltage, regulation compliance of current and voltage, carbon emission limits, right-of-way requirements, electromagnetic interference (EMI) limits, and sound emission limits. Therefore, the system is provided with a control capability that enables the supervisory utility to automatically manage policy issues such as standard compliance, carbon emission limits, right-of-way management requirements and environmental issues such as EMI limits, sound emission limits, etc. This also allows the supervisory utility to optimize energy cost, network reliability, and asset utilization and life. The current application covers the optimized automatic management of policy issues using the self-aware and intelligent distributed FACTS controllers and sensors that are integrated across the power generation-distribution system with the high-speed local control capability and the supervisory control capability.

In some embodiments, the supervisory utility may be further configured such that determining the setting instructions for the plurality of intelligence centers for controlling the power flow on the transmission lines may further comprise optimizing at least one operational objective function. Said optimization may be based on the measured environmental conditions, and/or based on the sensed voltage and/or current and/or power flow changes of the plurality of transmission lines, and/or based on the at least one operational constraint. An optimization of an operational objective function may comprise an adaptation of the setting instructions provided by the supervisory utility to the respective localized intelligence centers to meet the requirement (e.g. target) of a variable operational objective function. In some embodiments the operational objective functions may be, for example, minimized, maximized or adapted during the operation of the system. This is because some particular operational objective functions may be variable along the time (e.g. cost of the energy), so that a particular target associated with a particular operational objective function may be variable along the time, and therefore an adaptation of the setting instructions may be required in real time in order to achieve the respective operational objective function.

The system for integrated and hierarchical monitoring and control of a high-voltage or medium-voltage power grid may further comprise one or more energy storage devices coupled to the power grid, preferably to at least one power transmission line. Each energy storage devices is preferably configured such that, when a power provided by the power generators exceeds a power demanded by the loads, thus resulting in an excess of power in the power grid, the one or more power storage units store said excess of power and provide said stored excess of power to the plurality of loads when the power provided by the power generators is lower than the power demanded by the loads.

The system according to the invention may further comprise one or more flexible alternating current transmission system FACTS-based control units (also identified as FACTS-based controllers), each of them being configured to communicate with at least one localized intelligence center. Each FACTS-based control unit is respectively connected to at least one power generator, or to at least one substation, or to at least one power storage unit or to at least one of the plurality of loads, preferably belonging to the subplurality of loads having demand-response capability.

Each FACTS-based control unit may be further configured to selectively control the coupling to the power grid of the at least one power generator, or the at least one substation, or the at least one power storage unit, or the at least one of the plurality of loads connected to the respective FACTS-based control unit. The control of the coupling to the power grid of the different elements connected to the respective FACTS-based control unit may be based on specific coupling instructions provided by a respective localized intelligence center. Therefore, the FACTS-based control units may be configured to act as respective connection interfaces between the power grid and the respective elements they are connected to (i.e. the at least one power generator, or the at least one substation, or the at least one power storage unit or the at least one of the plurality of loads).

The one or more energy storage devices may be connected to the power grid by means of respective flexible alternating current transmission system FACTS-based control units (i.e. FACTS-based controllers), such that the control of the storage and/or supply of power into/from the one or more energy storage devices may be controlled by the FACTS-based control unit.

The FACTS-based control units connected to the power generators (e.g. conventional power plants and distrusted generation plants, such as wind or solar energy plants) allow the system to control the power entering into the power grid by selectively coupling or decoupling (i.e. connecting or disconnecting from the power grid) the power generators connected to one or more FACTS-based control units. The FACTS-based control units connected to the energy storage units allow the system to control the when the respective energy storage devices are coupled or decoupled to the power grid for storing or delivering power energy. The FACTS-based control units connected to the loads allows the system to control the power demand of the system by selectively coupling or decoupling the loads connected to one or more of the FACTS-based control units.

The localized intelligence centers may be further configured to provide specific coupling instructions, based on the setting instructions provided by the supervisory utility, to the one or more FACTS-based control units for controlling the power flow on the respective transmission lines by selectively coupling or decoupling the respective elements to which they are connected. The FACTS-based control units may be further configured to receive the coupling instructions from the respective intelligence centers, and to selectively couple/decouple to/from the power grid the at least one power generator, or the at least one substation, or the at least one power storage unit, or the at least one of the plurality of loads respectively connected to the respective FACTS-based control unit, thereby controlling the power flow on the transmission lines.

The plurality of impedance injection modules IIM may be further configured as FACTS- based controlled IIM, i.e. being controllable by a respective localized intelligence center to be selectively couple or decouple to the power grid.

In some embodiments, a communication link is provided for conducting the communication between the supervisory utility and each localized intelligence center. In preferred embodiments, the said communication link is configured to be slower (i.e. to provide a communication with a lower speed rate) than a high-speed communication link.

A second aspect of the invention relates to a method for hierarchical monitoring and control of a power grid with a system according to the description provided. The method may comprise the steps of: receiving by a supervisory utility, preferably in real-time, the environmental conditions of the plurality of transmission lines measured by the plurality of sensors ; receiving, by the supervisory utility, preferably in real time, the power characteristics of the transmission lines sensed by the respective impedance injection modules IIMs; determining by the supervisory utility, and based on the received environmental conditions and the received power flow characteristics of the transmission lines, settings instructions (i.e. optimal decisions and instructions) for the plurality of localized intelligence centers for controlling the power flow of the of the transmission lines; communicating the setting instructions to the plurality of localized intelligence centers; providing, by means of the plurality of localized intelligence centers configured to be in communication with at least one of the plurality of IIM, specific injection settings for the plurality of IIMs, based on the setting instructions provided by the supervisory utility, for controlling the power flow of the transmission lines; receiving by the plurality of IIMs the respective specific injection settings; and locally injecting, by means of the plurality of IIMs, voltage or impedance into the respective segments of the respective transmission lines, thereby controlling the power flow of the transmission lines.

In some embodiments, the method may further comprise: providing, by means of the plurality of localized intelligence centers configured to be in communication with at least one of the one or more FACTS-based control unit, specific coupling instructions to the one or more FACTS-based control units, said specific coupling instructions being based on the setting instructions provided by the supervisory utility, for controlling the power flow of the transmission lines; receiving by the one or more FACTS-based control units the respective specific injection settings; and locally coupling or decoupling to the power grid, following the coupling instructions and by means of the one or more FACTS-based control units, the at least one power generator, or the at least one substation, or the at least one power storage unit, or the at least one of the plurality of loads respectively connected to the respective FACTS-based control unit, thereby controlling the power flow on the transmission lines.

It is noted that the control of the power flow and/or the achievement of an operational objective function and/or of an operational constraint is accomplished by the system and method according to the present invention by means of the determination of the setting instructions provided by the supervisory utility to the respective localized intelligence centers. The setting instructions are received by the respective localized intelligence centers, wherein each localized intelligence center defines a local area of the system, and the setting instructions are subsequently transmitted to the plurality of elements (e.g. IIMs and FACTS-based control units) that are connected and under a hierarchical control of the localized intelligence centers. The setting instructions are determined considering the particular operational circumstances (measured environmental conditions, sensed power flow characteristics, power generation availability, power storage availability, power demand) of each situation, and further considering the functional objective of the system (power flow control, achievement of one or more operational objective functions, achievement of one or more operational constraints). The setting instructions may be configured to be location specific (i.e. specifically provided for being applied in specific local areas) and time dependent.

The localized intelligence centers are configured to receive the setting instructions, to interpret them and to selectively provide respective injections settings to one or more IIMs and/or respective specific coupling instructions to one or more of the FACTS-based control units for accomplishing the power flow control of the power grid (e.g. controlling the power factor of the power grid or simply controlling the power flowing through the power system), wherein in some cases controlling the power flow control may further comprise the configuration of the system for achieving at least one operational objective function and/or at least one operational constraint for the system.

### BRIEF DESCRIPTION OF THE DRAWINGS

Embodiments of the disclosure are illustrated by way of example and not limitation in the figures of the accompanying drawings in which like references indicate similar elements.
Figure 1 is a block diagram illustrating a total power system from generation to distribution with distributed local sub-cyclic response capability and hierarchical monitoring and supervision capabilities.
Figure 2 is a diagram illustrating a FACTS-based sensor module according to one embodiment.
Figure 3 is a diagram illustrating an impedance injection module (IIM) according to one embodiment.
Figure 4 is a diagram illustrating an exemplary supervision utility, with a processing capability therein, and configured as an optimization engine according to one embodiment.
Figure 5 is a block diagram of a data processing system, which may be used with one embodiment of the invention.

### DETAILED DESCRIPTION

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosures.

Reference in the specification to "one embodiment" or "an embodiment" means that a particular feature, structure, or characteristic described in conjunction with the embodiment can be included in at least one embodiment of the disclosure. The appearances of the phrase "in one embodiment" in various places in the specification do not necessarily all refer to the same embodiment.

The invention provides a system with integrated control capability that enables optimization of a power grid from generation to distribution. The system incorporates at least one or some of real-time measurement data: including voltage, current, temperature, humidity, noise, wind speed, geomagnetically induced current (GIC) vibration. The system comprises a supervisory utility, which may include a processing capability, and which may preferably be configured as an optimization engine, configured to extend the operational envelopes of the power grid, for instance, by dynamically de-rating line to match a determined current conditions without assuming the static worst-case operating scenarios.

According to some embodiments, a system for an integrated and hierarchical monitoring and control of a high-voltage or medium-voltage power grid is described. The power grid includes localized intelligence centers, transmission lines to transport power at high-voltage or medium-voltage from power generators to substations or other distributed loads, sensors coupled to and collectively distributed over or deployed along the transmission lines, with each sensor being configured to measure environmental conditions of its respective transmission line, impedance injection modules (IIMs) coupled to and deployed along the transmission lines, with each IIM being configured to inject voltage or impedance into its respective transmission line and to communicate with at least one localized intelligence center, and a supervisory utility configured to communicate with the power generators, the substations, and the localized intelligence centers. In one embodiment, the localized intelligence centers, the sensors, the IIMs, and the supervisory utility collectively provide hierarchical monitoring and control of the power grid, with the IIMs locally responding to specific injection settings provided by the localized intelligence centers to control power flow of the transmission lines. In one embodiment, the localized intelligence centers provide the specific injection settings based on optimal decisions and settings received from the supervisory utility, wherein optimal decisions and settings are also referred to as setting instructions for the localized intelligence centers.

According to yet another embodiment, a method for hierarchical monitoring and control of a power grid is described. The method includes receiving environmental conditions of HV or MV transmission lines of the power grid. The method further includes receiving, from a number of IIMs coupled to and deployed along the transmission lines, voltage or current of the HV or MV transmission lines. The method further includes identifying objective functions and constraints, and determining optimal decisions and settings based on the environmental conditions of the transmission lines, the voltage or current of the transmission lines, the objective functions, and the constraints. The method may further include controlling power flow or voltage of the transmission lines using the optimal decisions and settings, i.e. using the setting instructions provided by the supervisory utility to the localized intelligence centers.

According to still another embodiment, a high-voltage or medium-voltage power grid is described. The power grid includes localized intelligence centers, transmission lines to transport power at high-voltage or medium-voltage from power generators to substations or other distributed loads, impedance injection modules (IIMs) coupled to and deployed along the transmission lines, with each IIM being configured to inject voltage or impedance into its respective transmission line and to communicate with at least one localized intelligence center, and a supervisory utility configured to communicate with the power generators, the substations, and the localized intelligence centers. In one embodiment, the localized intelligence centers, the sensors, the IIMs, and the supervisory utility collectively provide hierarchical monitoring and control of the power grid, with the IIMs locally responding to specific injection settings provided by the localized intelligence centers to control power flow of the transmission lines. In one embodiment, the localized intelligence centers provide the specific injection settings based on optimal decisions and settings received from the supervisory utility.

The invention disclosed is generally directed at providing a capability for the power generation-distribution system to achieve optimized operation capability while further preferably meeting at least one operational objective function and/or at least one operational constraint. This is possible with the use of distributed or deployed IIMs on the power grid and the FACTS based intelligent and distributed control (i.e. the FACTS-based control units) of the connected generators, loads, storage devices, and/or control devices at the edge of the grid. In addition, a plurality of sensors, preferably configured as FACTS based sensor modules and/or independent sensors, are also implemented on the power system and are configured to sense/measure any changes in the local environment (i.e. the plurality of sensors are configured to measure the environmental conditions of the area of the power grid where they are connected) and any changes in the characteristics of the components (i.e. the different functional elements comprised in the system, such as the transmission lines, the localized intelligence centers, the plurality of IIMs, the FACTS-based control units) of the power system.

Figure 1 is a block diagram illustrating a system for integrated and hierarchical monitoring and control integrated into a power grid, from generation to distribution, with distributed local response capability (preferably sub-cyclic response capability) and hierarchical monitoring and supervision capabilities. In one embodiment, the power grid 100 of Figure 1 may be a power grid as described in the U.S. application 15/428,906, entitled "Dynamic and Integrated Control of Total Power System Using Distributed Impedance Injection Modules and Actuator Devices within and at the Edge of the Power Grid."

As shown, system 100 includes generation capacity configured as at least one power generator 203 that is connected to the HV/MV power grids enabled for power transfer over the high-voltage and medium-voltage transmission lines 910 and 920, wherein the transmission lines 910 and 920 respectively comprise a plurality of segments 108, a wherein the transmission lines 910 and 920 may be configured to be suspended from transmission towers 201. In Figure 1, there is a HV/MV power grid comprising two transmission lines 910 and 920, though any number of transmission lines may exist in system 100, and associated distributed impedance injection modules (IIMs) 300, and FACTS-based control units (i.e. actuator devices for controlling a coupling the power grid of a given element connected to the grid via the respective FACTS-based control units) 500 that are enabled with distributed standardized control and communication capabilities. The transmission lines 910 and 920 are configured to transport power at high-voltage or medium-voltage from the power generators to the sub-stations and/or to a plurality of loads. Distributed or deployed IIMs 300 are attached to the respective segments 108 of the transmission lines 910 and 920 to control the power flow or voltage on the HV/MV transmission lines 910 and 920. Distributed or deployed IIMs 300 may be self-aware with built-in capability or intelligence to recognize problems on transmission lines 910 and 920. Actuator devices 500 may be configured as FACTS-based control units connected to the power grid, preferably enabled with high-speed (sub-cyclic) communication capability, wherein and FACTS-based control units further are further configured to provide a control capability. The control capability is defined by the FACTS-based control unit being configured as an interface for connecting to the power grid at least one power generator, or at least one substation, or at least one power storage unit or at least one of the plurality of loads, wherein the FACTS-based control unit is further configured to receive coupling instructions, preferably from a localized intelligence center, for selectively coupling to the grid the elements to which it is acting as an connecting interface. In some embodiment, the actuator devices 500, preferably configured as FACTS-based control units, may include one or more of: static synchronous series compensators (SSSC), static synchronous compensators (STATCOMs), unified power-flow controllers (UPFCs), interline power-flow controllers (IPFCs), and/or other electronic systems for monitoring and control of the power flow or voltage over the HV/MV power grid.

Still referring to Figure 1, system 100 is preferably configured to provide sub-cyclic control and appropriate communication for all the distributed or deployed IIMs 300, actuator devices 500, and miscellaneous devices coupled to the power grid through FACTS-based control units, such as power generators 203 (including distributed generators 600), energy storage devices 800, etc., that are inside, at the edge and outside the edge of the power grid to provide a distributed but integrated sub-cyclic control and response capability to the total power system. These enable optimization of the operation of the total power system 100 from generation to distribution. Distributed generators 600 refers to the distributed generation capability (other than the large conventional generation stations) that could be inside, at, or outside the edge of the HV/MV power grid, but are coupled to the HV/MV power grid with FACTS-based control units, preferably enabled with high speed communication capability. These include, for example, wind energy farms, solar energy farms, bioenergy units, wave energy units, etc. that are typically non-conventional producers of energy. This also may include all conventional distributed generation sources but not traditional large generation capabilities, such as pre-existing thermal power plants, atomic power plants, hydroelectric plants etc., that are controlled directly by the supervisory utility 206. Supervisory utility 206 refers to the supervisory entity enabled for central monitoring, modelling and control of total power system 100 having communication links to the LINCs 302 for data collection and providing system control. Energy storage devices 800 are distributed energy storage capability typically inside, at, or outside, the edge of the HV/MV power grid but coupled to the HV/MV power grid with or without FACTS-based control units enabled with high-speed communication. The edge of the HV/MV power grid refers to a boundary of the HV/MV power grid, with some temporal and/or spatial functionality outside the direct control of utilities and distribution operators.

In Figure 1, the distributed or deployed IIMs 300, local intelligence centers (LINCs) 302, actuator devices 500, energy storage devices 800, and distributed generators 600, as well as distributed loads with demand-response capabilities 700, are all with control capability that is typically FACTS-based and are interconnected locally using the high-speed communication provided by high-speed communication links 303 associated with each of the devices. This communication capability is provided through the nearest LINC 302, shown in Figure 1, for localized communication and control supervision. In one embodiment, distributed loads 700 refer to power distribution systems that are inside, at, or outside the edge of the HV/MV power grid but are coupled to the HV/MV power grid with or without FACTS-based control units and enabled with high speed communication.

The LINCs 302 are also interconnected with high-speed link connections for high-speed inter-LINC communication between neighboring local areas. The LINCs 302 are further connected to supervisory utility 206 using communication connections 305, which may be slower than the high-speed connection links 303, to enable data transfer and overall supervisory control of the total power system 100.

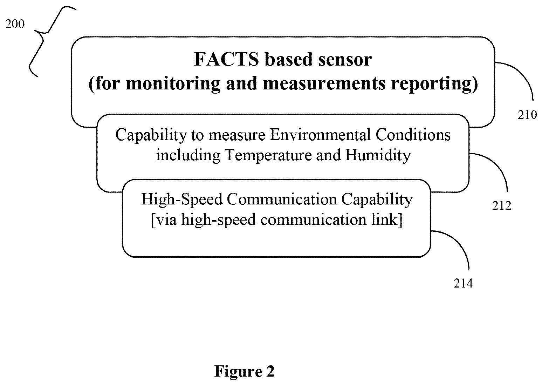

Figure 2 is a diagram illustrating a FACTS-based sensor module compatible with a plurality of embodiments of the invention. In Figure 2, FACTS based sensor module 200 may include FACTS based sensor 210 having capability 212 to measure and report environmental conditions, including temperature, humidity, noise, wind speed, geomagnetically induced current (GIC) vibration, using high-speed communication capability 214 (e.g., high-speed transceiver) to one or more LINCs 302, with connectivity through high speed communication links 303 (as shown in Figure 1) to provide the sub-cyclic local response. In one embodiment, FACTS-based sensor module 200 can be built-in as part of IIM 300, or completely independent from IIM 300 but communicating to IIMs 300 or LINCs 302 with its high-speed communication capability 214.

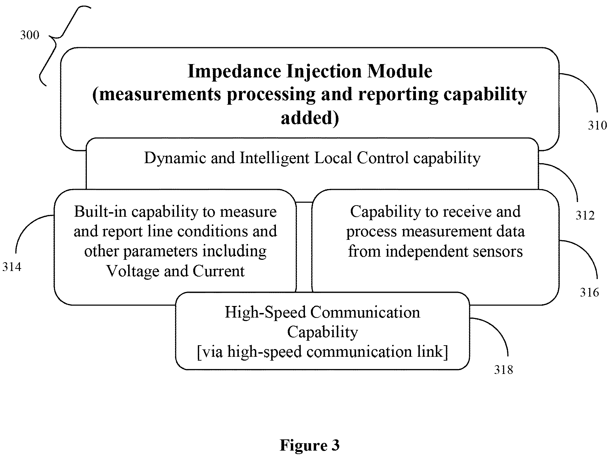

Figure 3 is a diagram illustrating an impedance injection module (IIM) compatible with a plurality of embodiments of the invention. Referring to Figure 3, a IIM 300 is depicted as including measurements, processing and reporting capability 310, added to standard dynamic and intelligent local control capability 312. The built-in capability 314 can measure and report line conditions, including voltage and/or current (i.e. power flow characteristics of the transmission lines), while capability 316 can receive and process measurement data from other independent sensors. Using high-speed communication capability 318, IIM 300 may communicate with one or more LINCs 302 and independent sensors through high-speed communication links 303. In one embodiment, IIM 300 may respond to specific injection settings provided by LINCs 302 by injecting voltage or impedance into a transmission line (e.g., HV/MV transmission lines 108).

The real-time measurement data allow the supervisory utility 206 to improve the operational performance of the power grid. For this purpose, the supervisory utility 206 may comprise a data processing capability, preferably by being configured as an optimization engine (as described in more detail herein below) which can be used/configured to increase the utilization of the overall system by not having to assume the static worst-case operating scenarios of the rated components.

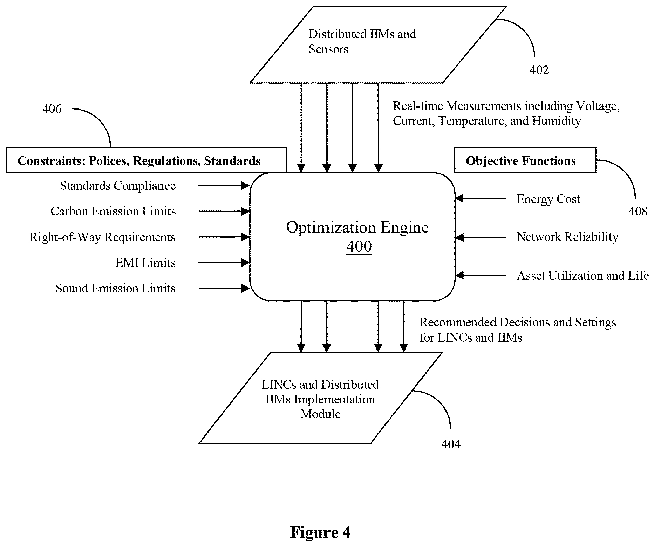

Figure 4 is a diagram illustrating an exemplary optimization engine according to one embodiment. In one embodiment, the optimization engine may be performed by a supervisory utility (e.g., supervisory utility 206 of Figure 1). Thus, the supervisory utility may be configured to operate as an optimization engine according to Figure 4, preferably by comprising a data processing capability, e.g. by being configured as a data processor system or by comprising a data processor. In Figure 4, the optimization engine 400 comprises external interfacing modules: the measurement input module 402 for providing the information measured or sensed by the distributed or deployed IIMs and sensors; and the LINCs and distributed or deployed IIMs implementation module 404 for communicating the setting instructions. Optimization engine 400 is further configured to take input parameters, such as the policies and local requirements or rules as operational constraints 406, and power factor adjustment, energy cost, network reliability, and asset utilization and life as operational objective functions 408. Optimization engine 400 incorporates also the real-time measurements, including current, voltage, temperature, humidity, noise, wind speed, geomagnetically induced current (GIC) vibration, as provided by distributed or deployed IIMs and sensors 402, to perform comprehensive dynamic line rating (DLR) and real-time thermal rating (RTTR) as opposed to static worst-case engineering operating assumptions. The inclusion of the real-time sensor measurements can improve and enhance the utilization and performance of the whole power grid. In one embodiment, constraints 406 and/or the real-time measurements are utilized to optimize (e.g., minimize or maximize) at least one of the operational objective functions 408.

Operational constraints may comprise policies, regulations, and/or standards 406 on the power system include standard compliance, carbon emission limits, right-of-way management requirements, and other local environmental issues such as EMI limits, sound emission limits, etc.

**1. Standard compliance:** By using the intelligent IIMs distributed over or deployed along the high-voltage power and medium-power lines of the grid, the supervisory utility is able to establish rules (i.e. to provide setting instructions that are sent to the respective locally intelligence center, which are subsequently communicated to the corresponding IIMs as injection settings) to be implemented by the distributed or deployed IIMs injecting impedance or voltage for optimized power transfer capabilities of the plurality of power grids connecting the generators to distribution points, and keep the grid operating within the standard compliance limits of current and voltage, and preferably further controlling the power factor of the power grid.

**2. Carbon emission limits:** Use of least carbon-intensive energy sources from environmentally friendly wind, solar, geothermal, tidal or wave sources for demand fluctuations allow the system to reduce and optimize the carbon emission and meet policy constraints set by the government and the utility. Therefore, the supervisory utility may be configured to provide setting instructions for the localized intelligence centers, wherein said setting instructions are subsequently communicated as coupling instructions to the respective FACTS-based control units controlling the coupling of the power generators so as to prioritize the use of power generators involving less carbon emissions to meet a particular limit of carbon emissions.

**3. Right-of-way management requirements:** In some areas there are constraints that limit the power line rating during certain time periods. It is difficult for the utility to control this and accept right-of-way in these locations. By having a system for integrated and hierarchical monitoring and control of a power grid, configured to provide local control capability to adjust power transfer over HV and MV power lines of the grid based on pre-established rules, the utility is able to cater to the local rules and constraints and still use the right-of-way.

**4. Electromagnetic Interference (EMI) limits:** This again can be linked to the local environmental needs established, which specify EMI limits during certain times for the safety and health of the local population. The supervisory utility may be configured to provide setting instructions that limit the current through the power grid and divert power to alternate grid connections during these times (e.g. by coupling or decoupling loads by means of the FACTS-based control units receiving coupling instructions from the respective local intelligence centers based on the setting instructions provided by the supervisory utility). Thus, the utility is able to cater to the needs and requirements of the local administration and still utilize the available capacity of these HV and MV power lines.

**5. Sound emission limits:** This again can be linked to the local environmental needs established, which specify limits for the fundamental frequency, e.g., 50 or 60-Hz, 60-Hz, hum of the power lines during quiet times for the comfort and health of the local population. By having a system for integrated and hierarchical monitoring and control of a power grid, configured to provide to limit the current through the power grid and divert power to alternate grid connections during these times, the utility is able to cater to the needs and requirements of the local administration and still utilize the available capacity of these HV and MV power lines. This kind of operational constraint can be meet or achieve by configuring the supervisory utility as described for the EMI limits constraint, but adapted to meet the sound emission limit.

While meeting these requirements, this optimization engine aims to optimize a set of operational objective functions 408, including energy cost, network reliability and asset utilization and life.

**1. Optimization of energy cost:** Energy cost has multiple components, including where the power is purchased from, how generators are scheduled, power transfer efficiency of the grid, etc. A system for integrated and hierarchical monitoring and control of a power grid, configured to provide a unified control capability using edge connected FACTS controllers allows lowest-cost power sourcing into the grid at any time from the power generation capability, such as standard generators, distributed generators or stored power, using per established rules. This facilitates the lowest-cost energy sources and storage to be used while employing the next level (cost-wise more expensive) sources to cover intermittent and peak demands. Using the distributed or deployed IIMs to enable optimized power transfer over the grid also reduce the losses in transmission and reduce the cost of power.

**2. Optimization of network reliability:** With real-time line conditions and information, new generators can be brought online as necessary and power flow can be redistributed by the optimization engine to improve network reliability and avoid outage with appropriately defined reliability metrics.

**3. Optimization of asset utilization and life:** Most of the elements of the power grid and attached devices, such as HV and MV power transmission lines, switches, transformers, connectors, etc. have a normal power handling capability and a peak power handling capability. The power ratings of the elements are also impacted by the local environmental conditions. The optimal power capability has to be de-rated, under adverse local conditions, for the devices to maintain lifetime of the asset. Using the power system elements at the higher stress level as provided by the peak power capability even for short periods of time tends to reduce their life expectancy due to accelerated aging. A system for integrated and hierarchical monitoring and control of a power grid, configured to provide an integrated control capability, with localized fast control capability established by the high-speed communication links, allows the utility to establish power handling rules that can be implemented by the connected sensors and/or control modules to limit any overstressing of the various elements and devices on the grid even under adverse local conditions. By having an integrated communication and control capability it is possible to have a more level and even utilization of resources as demands change and availability change on the power system. The sensors and FACTS based controllers, working together with the supervisory utility, are able to control the input from the power generators and from the power storage devices, and to control the flow of power in the available transmission lines of the grid in a timelier fashion to use all available resources optimally. This utilization optimization leads to better asset life management and improves the return on investment for the utilities.

Based on operational constraints and/or operational objective functions related requirements, the output of the engine 400 produces setting instructions (i.e., recommended changes or optimal decisions and settings) for LINCs 302 and impedance IIMs 300 for implementation. The LINCs 302 are configured to interpret the setting instructions and to communicate respective injection settings to the corresponding IIMs and/or to interpret the setting instructions to communicate specific coupling instructions to the corresponding FACTS-based control units. Thus, the distributed or deployed IIMs and other FACTS-based controllers implement the optimization based on local conditions identified and constraints provided to the optimization engine. Additionally, high-level commands such as priorities and weighting factors can be sent to the controllers to fine-tune the implementations at each controller.

All the inputs and outputs are most likely to be location-specific and time-dependent in the optimization process.

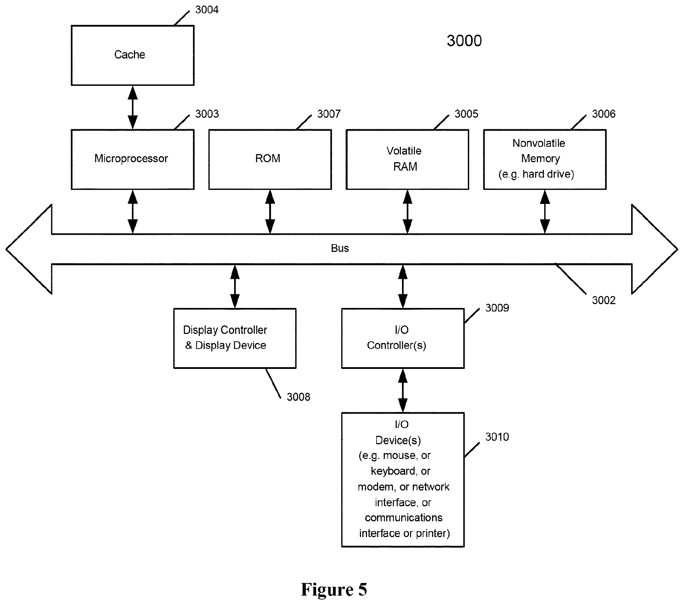

Figure 5 is a block diagram of a data processing system 3000, which may be used in some embodiments of the invention. For example, the system 3000 may be used to execute the optimization engine 400 as shown in Figure 4. In one embodiment, system 3000 may be disposed within supervisory utility 206, as shown in Figure 1. Note that while Figure 5 illustrates various components of a computer system, it is not intended to represent any particular architecture or manner of interconnecting the components; as such details are not germane to the invention. It will also be appreciated that network computers, handheld computers, mobile devices (e.g., smartphones, tablets) and other data processing systems which have fewer components or perhaps more components may also be used with the invention. The system 3000 of Figure 5 may, for example, be a host or a server.

As shown in Figure 5, the system 3000, which is a form of a data processing system, includes a bus or interconnect 3002 which is coupled to one or more microprocessors 3003 and a ROM 3007, a volatile RAM 3005, and a non-volatile memory 3006. The microprocessor 3003 is coupled to cache memory 3004. The bus 3002 interconnects these various components together and also interconnects these components 3003, 3007, 3005, and 3006 to a display controller and display device 3008, as well as to input/output (I/O) devices 3010, which may be mice, keyboards, modems, network interfaces, printers, and other devices which are well-known in the art.

Typically, the input/output devices 3010 are coupled to the system through input/output controllers 3009. The volatile RAM 3005 is typically implemented as dynamic RAM (DRAM) which requires power continuously in order to refresh or maintain the data in the memory. The non-volatile memory 3006 is typically a magnetic hard drive, a magnetic optical drive, an optical drive, or a DVD RAM or other type of memory system which maintains data even after power is removed from the system. Typically, the non-volatile memory will also be a random access memory, although this is not required.

While Figure 5 shows that the non-volatile memory is a local device coupled directly to the rest of the components in the data processing system, a non-volatile memory that is remote from the system may be utilized, such as, a network storage device which is coupled to the data processing system through a network interface such as a modem or Ethernet interface. The bus 3002 may include one or more buses connected to each other through various bridges, controllers, and/or adapters, as is well-known in the art. In one embodiment, the I/O controller 3009 includes a Universal Serial Bus (USB) adapter for controlling USB peripherals. Although not shown in Figure 5, I/O controller 3009 may further include a network interface device that may include a wireless transceiver and/or a network interface card (NIC). The wireless transceiver may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, or a combination thereof. The NIC may be an Ethernet card.

While the disclosure has been described in terms of several embodiments, those of ordinary skill in the art will recognize that the invention is not limited to the embodiments described, but can be practiced with modification and alteration known to practitioners of the art. These modifications and alternate practices, though not explicitly described, are covered under the current application. The practice of the invention is further covered within the spirit and scope of the appended claims. There are numerous other variations to different aspects of the invention described above, which in the interest of conciseness have not been provided in detail. Accordingly, other embodiments are within the scope of the claims.

## Claims

1. A system (100) for integrated and hierarchical monitoring and control of a high-voltage or medium-voltage power grid, the system comprising:
a plurality of localized intelligence centers (LINC, 402);
a high-voltage or medium voltage power grid comprising a plurality of transmission lines (910, 920) configured to transport power at high-voltage or medium-voltage, preferably from power generators (203, 600) to substations and/or to a plurality of loads (700), wherein the plurality of loads (700) comprise loads distributed over the transmission lines (910, 920) and/or loads external to the power grid, and wherein preferably at least a subplurality of the loads is configured to be selectively connected to the power grid with a connection configured to have a demand-response capability;
a plurality of sensors (200) coupled to and collectively distributed over or deployed along the transmission lines (910, 920), each sensor (200) being configured to measure environmental conditions of one of the plurality of transmission lines (910, 920);
a plurality of impedance injection modules IIMs (300) deployed along the transmission lines (910, 920), each IIM (300) being coupled to a respective segment (108) of one of the plurality of transmission lines and being configured to sense power flow characteristics comprising current and/or voltage and/or power flow changes on the respective transmission line, and to inject voltage or impedance into the respective transmission line (910, 920), and to communicate with at least one localized intelligence center (LINC, 302); and
a supervisory utility configured (206) for:
receiving, preferably in real-time, the environmental conditions measured by the plurality of sensors (200);
receiving, preferably in real-time, the power flow characteristics of the transmission lines (910, 920) sensed by the respective IIMs (300);
determining, based at least on the received environmental conditions and the received power flow characteristics of the transmission lines (910, 920), setting instructions for the plurality of localized intelligence centers (LINC, 302) for controlling the power flow on the transmission lines (910, 920); and
communicating the setting instructions to the plurality of localized intelligence centers (LINC, 302);
wherein the localized intelligence centers (LINC, 302) that are in communication with at least one of the plurality of IIMs (300) are further configured to provide specific injection settings to the respective IIMs (300), based on the setting instructions provided by the supervisory utility (206), for controlling the power flow on the transmission lines (910, 920);
wherein the plurality of IIMs (300) are configured to receive the specific injection settings from the respective intelligence centers (LINC, 302), and are further configured to locally inject voltage or impedance into the respective segment (108) of the respective transmission line (910, 920) based on the specific injection settings provided by the localized intelligence centers (LINC, 302), thereby controlling the power flow of the transmission lines (910, 920).

2. The system (100) of claim 1, wherein the environmental conditions measured by the plurality of sensors (200) include at least one of: temperature, humidity, noise, wind speed, and/or geomagnetically induced current GIC vibration.

3. The system (100) of claims 1 or 2, wherein the supervisory utility (206) is further configured to identify at least one operational objective function for the system (100) and/or at least one operational constraint for the system (100); and
wherein the supervisory utility (206) is further configured such that determining the setting instructions for the plurality of localized intelligence centers (LINC, 302) for controlling the power flow on the transmission lines (910, 920) further comprises achieving the at least one operational objective function for the system (100) and/or the at least one operational constraint for the system (100).

4. The system (100) of claim 3, wherein
the at least one operational objective function is selected from: correcting the power factor of the power grid, obtaining an energy cost target or optimization, obtaining a network reliability target or optimization, and obtaining an asset utilization and life target or optimization; and/or
the at least one operational constraint is selected from: standard compliance of current and voltage, regulation compliance of current and voltage, carbon emission limits, right-of-way requirements, electromagnetic interference EMI limits, and sound emission limits.

5. The system (100) of claims 3 or 4, wherein the supervisory utility (206) is further configured such that determining the setting instructions for the plurality of intelligence centers (LINC, 302) for controlling the power flow on the transmission lines (910, 920) further comprises optimizing at least one operational objective function based on the measured environmental conditions, and/or based on the sensed voltage and/or current and/or power flow changes of the plurality of transmission lines (910, 920), and/or based on the at least one operational constraint.

6. The system (100) of any of the preceding claims, further comprising one or more energy storage units (800) coupled to the power grid, preferably to at least one power transmission line (910, 920);
wherein each energy storage units (800) is preferably configured such that, when a power provided by the power generators (203, 600) exceeds a power demanded by the loads (700) thus resulting in an excess of power in the power grid, the one or more power storage units (800) store said excess of power and provide said stored excess of power to the plurality of loads (700) when the power provided by the power generators is lower than the power demanded by the loads (700).

7. The system (100) of any of the preceding claims, further comprising one or more flexible alternating current transmission system FACTS-based control units (500) configure to communicate with at least one localized intelligence center (LINC, 302);
wherein each FACTS-based control unit (500) is respectively connected to at least one power generator (203, 600), or to at least one substation, or to at least one power storage unit (800), or to at least one of the plurality of loads (700), preferably belonging to the subplurality of loads with a demand response capability;
wherein each FACTS-based control unit (500) is further configured to selectively control the coupling to the power grid of the at least one power generator (203, 600), or the at least one substation, or the at least one power storage unit (800), or the at least one of the plurality of loads connected to the respective FACTS-based control unit (500);
wherein the localized intelligence centers (LINC, 302) are further configured to provide specific coupling instructions, based on the setting instructions provided by the supervisory utility (206), to the one or more FACTS-based control units (500) for controlling the power flow on the transmission lines (910, 920); and
wherein the FACTS-based control units (500) are configured to receive the specific coupling instructions from the respective intelligence centers (LINC, 302), and are further configured to selectively couple or decouple to the power grid, following the coupling instructions, the at least one power generator (203, 600), or the at least one substation, or the at least one power storage unit (800), or the at least one of the plurality of loads (700) respectively connected to the respective FACTS-based control unit (500), thereby controlling the power flow on the transmission lines (910, 920).

8. The system (100) of any of the preceding claims,
wherein each sensor (200) is configured to communicate, preferably in real-time, the respective measured environmental condition to at least one localized intelligence center (LINC, 302), and wherein preferably each sensor (200) further comprises a high-speed transceiver configured to communicate the environmental conditions to the localized intelligence centers (LINC, 302) through high-speed communication links (303) to provide the sub-cyclic local response.

9. The system of any of the preceding claims, wherein:
each IIM (300) includes a high-speed transceiver to report the sensed power flow characteristics to the at least one localized intelligence center (LINC, 302) through a high-speed communication link (303); and/or
the plurality of IIMs (300) are distributed over the transmission lines (910, 920) and/or disposed in at least one substation.

10. The system (100) of any of the preceding claims, wherein a respective communication link (305) is configured to conduct the communications between the supervisory utility (206) and each localized intelligence center (LINC, 302), and wherein each of said respective communication link (305) is configured to be slower than a high-speed communication link (303).

11. A method for hierarchical monitoring and control of a power grid with a system (100) according to any of the preceding claims, the method comprising:
receiving by the supervisory utility (206), preferably in real-time, the environmental conditions of the plurality of transmission lines (910, 920) measured by the plurality of sensors (200);
receiving by the supervisory utility (206), preferably in real time, the power characteristics of the transmission lines (910, 920) sensed by the respective impedance injection modules IIMs (300);
determining by the supervisory utility (206), and based on the received environmental conditions and the received power flow characteristics of the transmission lines (910, 920), settings instructions for the plurality of localized intelligence centers (LINC, 302) for controlling the power flow of the of the transmission lines (910, 920);
communicating the setting instructions to the plurality of localized intelligence centers (LINC, 302);
providing, by means of the plurality of localized intelligence centers (LINC, 302) configured to be in communication with at least one of the plurality of IIM (300), specific injection settings for the respective IIMs (300), based on the setting instructions provided by the supervisory utility (206), for controlling the power flow of the transmission lines (910, 920);
receiving by the plurality of IIMs (300) the respective specific injection settings; and
locally injecting, by means of the plurality of IIMs (300), voltage or impedance into the respective segments (108) of the respective transmission lines (910, 920), thereby controlling the power flow of the transmission lines (910, 920).

12. The method of claim 11, further comprising:
providing, by means of the plurality of localized intelligence centers (LINC, 302) configured to be in communication with at least one of the one or more FACTS-based control units (500), specific coupling instructions to the one or more FACTS-based control units (500), said specific coupling instructions being based on the setting instructions provided by the supervisory utility (206), for controlling the power flow of the transmission lines (910, 920);
receiving by the one or more FACTS-based control units (500) the respective specific coupling instructions; and
locally coupling or decoupling to the power grid, according to the specific coupling instructions and by means of the one or more FACTS-based control units (500), the at least one power generator (203, 600), or the at least one substation, or the at least one power storage unit (800), or the at least one of the plurality of loads (700) respectively connected to the respective FACTS-based control unit (500), thereby controlling the power flow on the transmission lines (910, 920).

13. The method of claims 11 or 12, further comprising:
Identifying or receiving, by the supervisory utility (206), at least one operational objective function for the system (100) and/or at least one operational constraint for the system (100); and
wherein determining by the supervisory utility (206) the setting instructions for the plurality of localized intelligence centers (LINC, 302) for controlling the power flow on the transmission lines (910, 920) further comprises achieving the at least one objective operational function and/or the at least one operational constraint for the system (100).

14. The method of claim 13, wherein
the at least one operational objective function is selected from: correcting the power factor of the power grid, obtaining an energy cost target or optimization, obtaining a network reliability target or optimization, and obtaining an asset utilization and life target or optimization; and/or
the at least one of operational constraint is selected from: standard compliance of current and voltage, regulation compliance of current and voltage, carbon emission limits, right-of-way requirements, electromagnetic interference EMI limits, and sound emission limits.

15. The method of claims 13 or 14, wherein determining by the supervisory utility (206) the setting instructions for the plurality of intelligence centers (LINC, 203) for controlling the power flow on the transmission lines (910, 920) further comprises optimizing at least one operational objective function based on the measured environmental conditions, and/or based on the sensed voltage and/or current and/or power flow changes of the plurality of transmission lines (910, 920), and/or based on the at least one operational constraint.
